# EUROPEAN PATENT APPLICATION

(11) **EP 3 640 068 A1**
(43) Date of publication of application: **22.04.2020**
(21) Application number: 18818405.5
(22) Date of filing: 08.06.2018
(51) Int. Cl.: B60K 6/44, B60K 6/42

(54) **SERIES-PARALLEL HYBRID POWER SYSTEM AND VEHICLE COMPRISING SAME**

(30) Priority: 13.06.2017 CN 201710443989
(71) Applicant: Zhengzhou Yutong Bus Co., Ltd., Zhengzhou, Henan 450061 (CN)
(72) Inventor: WANG, Fusheng, Zhengzhou Henan 450061 (CN); CHEN, Huiyong, Zhengzhou Henan 450061 (CN); WANG, Yinshu, Zhengzhou Henan 450061 (CN); WANG, Xing, Zhengzhou Henan 450061 (CN); LIU, Xiaowei, Zhengzhou Henan 450061 (CN); LI, Jianfeng, Zhengzhou Henan 450061 (CN); WU, Shengtao, Zhengzhou Henan 450061 (CN)
(74) Representative: Gulde & Partner
(86) International application number: PCT/CN2018/090341
(87) International publication number: WO 2018/228273

(57) **Abstract**

The present disclosure provides a series-parallel hybrid power system and a vehicle comprising the series-parallel hybrid power system, in order to increase an output torque of a motor. The series-parallel hybrid power system includes a planetary gear set. The planetary gear set includes three power input ends and a power output end. The hybrid power system further includes an engine, a first motor, and a second motor. The engine, the first motor, and the second motor are correspondingly connected to the three power input ends, respectively. An output shaft of the engine, an output shaft of the first motor, and an output shaft of the second motor are non-coaxially arranged. The hybrid power system includes an engine locking mechanism configured to lock a power input end corresponding to the engine. A gearbox is arranged between at least one of the first motor and the second motor and a power input end corresponding to the planetary gear set. The gearbox can change a high rotational speed of the motor to a low rotational speed, and can change a low torque of the motor to a high torque, thereby increasing the torque input from the motor to the planetary gear set.

## Description

### TECHNICAL FIELD

The present disclosure relates to a series-parallel hybrid power system and a vehicle comprising the series-parallel hybrid power system.

### BACKGROUND

The series-parallel hybrid power system has superior performance over the series hybrid power system and the parallel hybrid power system. At present, the series-parallel hybrid power system mainly uses a planetary mechanism as a power-split device.

The Chinese Patent Application, with the publication number of CN106114185A and the publication date of November 16, 2016, discloses a hybrid power coupling transmission device. The transmission device (power system) includes a planetary gear set. The planetary gear set includes three power input ends and a power output end. The three power input ends are an input end of a sun gear, an input end of a gear ring, and an input end of a planet carrier, respectively, and the power output end is connected to a power output shaft. The power system further includes an engine, a first motor, and a second motor, which are correspondingly connected to the three power input ends, respectively, wherein one of the first motor and the second motor is a drive auxiliary motor, and the other is a drive motor. An output shaft of the engine, an output shaft of the first motor, and an output shaft of the second motor are arranged side by side. One brake is arranged between the output shaft of the engine and the planetary gear set, and another brake is arranged between an output shaft of the drive auxiliary motor and the planetary gear set. In this power system, different working modes can be switched by controlling the on-off of the first motor, the second motor and the engine. For example, in a pure electric mode, the engine stops operating, and the power output of the power system is provided by the drive motor; in a hybrid power mode, both the engine and the drive motor are operating, and the power output of the power system is provided by the drive motor and the engine; in an engine drive mode, the engine directly drives the vehicle.

However, in the power system mentioned-above, when the drive motor is operating to supply power to the power system, since the drive motor is directly connected to an output shaft of the planetary gear set through a gear, the value of the torque input from the drive motor to the planetary gear set is at a certain value. In order to increase the torque at the output end of the planetary gear set, a drive motor with a large output torque is required, which increases the cost of the drive motor. Moreover, the ratio of the rotational speed of the drive motor to the rotational speed of the output shaft of the planetary gear set is constant, and the ratio of the torques is also constant, and thus the drive motor cannot adapt. When the power system is in the engine drive mode, the engine will drive one of the power input ends of the planetary gear set to rotate. Since the drive motor is directly connected to the output shaft of the planetary gear set through the gear, the output shaft of the planetary gear set will drive the drive motor to rotate, thereby reducing the energy utilization rate of the power system due to the presence of the electromechanical conversion.

### SUMMARY

The objective of the present disclosure is to provide a series-parallel hybrid power system capable of increasing the output torque of the drive motor. The present disclosure further provides a vehicle comprising the series-parallel hybrid power system.

In order to achieve the above objective, the technical solution of the present disclosure is as follows. A series-parallel hybrid power system includes a planetary gear set. The planetary gear set includes three power input ends and a power output end. The hybrid power system further includes an engine, a first motor, and a second motor. The engine, the first motor and the second motor are correspondingly connected to the three power input ends, respectively. An output shaft of the engine, an output shaft of the first motor, and an output shaft of the second motor are non-coaxially arranged. The hybrid power system includes an engine locking mechanism configured to lock a power input end corresponding to the engine. A gearbox is arranged between at least one of the first motor and the second motor and a power input end corresponding to the planetary gear set.

The first motor is an integrated starter generator (ISG) motor, and the second motor is a main drive motor. The gearbox is arranged between the main drive motor and a power input end corresponding to the main drive motor.

The output shaft of the ISG motor is engaged with the power input end corresponding to the ISG motor by a gear of the ISG motor for transmission. The hybrid power system further includes an ISG motor locking mechanism configured to lock the output shaft of the ISG motor, or the gear of the ISG motor, or the power input end corresponding to the ISG motor.

The output shaft of the engine, the output shaft of the first motor, and the output shaft of the second motor are arranged side by side. The first motor and the second motor are respectively arranged on both sides of the output shaft of the engine. The engine, the first motor, and the second motor are located on the same side of the planetary gear set.

The hybrid power system includes a mounting base. The engine, the first motor, the second motor, the planetary gear set, and the gearbox are integrally mounted on the mounting base.

The hybrid power system has the following operating modes. I, pure electric drive mode 1: the engine does not start, the ISG motor does not operate, the engine locking mechanism is locked, the ISG motor locking mechanism is unlocked, and the main drive motor operates. The power is transferred to the gearbox through the output shaft of the main drive motor to decelerate and increase torque to drive the vehicle; II, pure electric drive mode 2: the engine does not start, the gearbox is in the neutral position, the main drive motor does not operate, the engine locking mechanism is locked, the ISG motor locking mechanism is unlocked, the ISG motor operates, and the ISG motor drives the vehicle; III, hybrid drive mode: the engine locking mechanism and the ISG motor locking mechanism are both unlocked, the engine operates, the ISG motor regulates a rotational speed and a torque of the engine, and the drive motor determines whether to operate and assist according to requirements of the whole vehicle; IV, engine direct drive mode: the engine locking mechanism is unlocked, the ISG motor locking mechanism is locked, the engine operates, the ISG motor does not operate, and the main drive motor determines whether to operate and assist according to the requirements of the whole vehicle; V, braking energy recovery mode: the engine does not operate, the ISG motor does not operate, the main drive motor provides a braking force, the gearbox is in different gear positions according to the requirements of different braking forces, the main drive motor is switched into a power generation state, and the planetary gear set drives the main drive motor to generate power.

According to the present disclosure, the technical solution of the vehicle is as follows. A vehicle includes a series-parallel hybrid power system. The hybrid power system includes a planetary gear set. The planetary gear set includes three power input ends and a power output end. The hybrid power system further includes an engine, a first motor, and a second motor. The engine, the first motor and the second motor are correspondingly connected to the three power input ends, respectively. An output shaft of the engine, an output shaft of the first motor and an output shaft of the second motor are non-coaxially arranged. The hybrid power system includes an engine locking mechanism configured to lock a power input end corresponding to the engine. A gearbox is arranged between at least one of the first motor and the second motor and a power input end corresponding to the planetary gear set.

The first motor is an ISG motor, and the second motor is a main drive motor. The gearbox is arranged between the main drive motor and the power input end corresponding to the main drive motor.

The output shaft of the ISG motor is engaged with the power input end corresponding to the ISG motor by the gear of the ISG motor to achieve the meshing transmission. The hybrid power system further includes an ISG motor locking mechanism configured to lock the output shaft of the ISG motor, or the gear of the ISG motor, or the power input end corresponding to the ISG motor.

The output shaft of the engine, the output shaft of the first motor, and the output shaft of the second motor are arranged side by side. The first motor and the second motor are respectively arranged on both sides of the output shaft of the engine, and the engine, the first motor and the second motor are located on the same side of the planetary gear set.

The hybrid power system includes a mounting base. The engine, the first motor, the second motor, the planetary gear set, and the gearbox are integrally mounted on the mounting base.

The hybrid power system has the following operating modes. I, pure electric drive mode 1: the engine does not start, the ISG motor does not operate, the engine locking mechanism is locked, the ISG motor locking mechanism is unlocked, the main drive motor operates, and the power is transferred to the gearbox through the output shaft of the main drive motor to decelerate and increase torque to drive the vehicle; II, pure electric drive mode 2: the engine does not start, the gearbox is in a neutral position, the main drive motor does not operate, the engine locking mechanism is locked, the ISG motor locking mechanism is unlocked, the ISG motor operates, and the ISG motor drives the vehicle; III, hybrid drive mode: the engine locking mechanism and the ISG motor locking mechanism are both unlocked, the engine operates, the ISG motor regulates a rotational speed and a torque of the engine, and the drive motor determines whether to operate and assist according to the requirements of the whole vehicle; IV, engine direct drive mode: the engine locking mechanism is unlocked, the ISG motor locking mechanism is locked, the engine operates, the ISG motor does not operate, and the main drive motor determines whether to operate and assist according to the requirements of the whole vehicle; V, braking energy recovery mode: the engine does not operate, the ISG motor does not operate, the main drive motor provides a braking force, the gearbox is in different gear positions according to requirements of different braking forces, the main drive motor is switched into a power generation state, and the planetary gear set drives the main drive motor to generate power.

The advantages of the present disclosure are as follows. According to the present disclosure, in the series-parallel hybrid power system, the gearbox is arranged between the motor and the power input end corresponding to the planetary gear set. The gearbox can change a high rotational speed of the motor to a low rotational speed, and change a low torque of the motor to a high torque, thereby increasing the torque input from the motor to the planetary gear set. Meanwhile, when the motor with the gearbox is in a non-operating state, the gearbox can be placed in the neutral position, so that the corresponding motor does not rotate and increase the load of the power system. In this disclosure, the engine locking mechanism can control whether the power input end of the planetary gear set corresponding to the engine rotates. According to the present disclosure, when the hybrid power system is in the pure electric mode, one of the motors is a drive motor, the engine locking mechanism is locked, and the engine does not rotate, thereby reducing the energy loss, so that the drive motor drives the vehicle through the action of reducing speed and increasing torque of the gearbox. Under the engine direct drive mode, the engine locking mechanism is unlocked. When an output torque of the engine is small, the motor drives the vehicle through the gearbox to assist the vehicle to run. When the output torque of the engine is exactly enough for the vehicle to run, the motor does not operate. When the output torque of the engine is large, the motor turns into a generator, and stores energy in the power source. In the present disclosure, the gearbox functions to decelerate and increase the torque, and can also be changed according to the actual running condition of the vehicle, so as to adapt for vehicle driving.

### BRIEF DESCRIPTION OF THE DRAWING

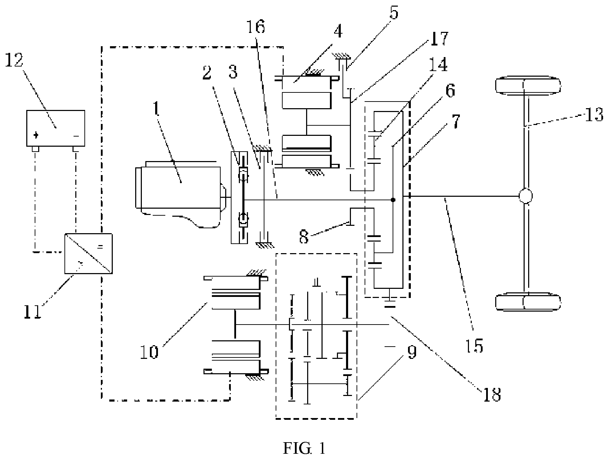

FIG 1 is a schematic diagram showing the vehicle in an embodiment of the present disclosure.

In the drawing, 1, engine; 2, torque damper; 3, first locking mechanism; 4, ISG motor; 5, second locking mechanism; 6, planet carrier; 7, gear ring; 8, sun gear; 9, gearbox; 10, main drive motor; 11, integrated controller; 12, power source; 13, rear axle.

### DETAILED DESCRIPTION OF THE EMBODIMENTS

The method of the present disclosure will be further described hereinafter with reference to the drawing shown in Figure 1.

In a specific embodiment of the vehicle of the present disclosure, as shown in FIG. 1, the vehicle includes the series-parallel hybrid power system and the rear axle 13. The series-parallel hybrid power system includes the planetary gear set. The planetary gear set includes the sun gear 8, the planet carrier 6, and the gear ring 7. The planetary gear 14 is mounted on the planet carrier 6. The external teeth of the planetary gear 14 are simultaneously engaged with the internal teeth of the gear ring 7 and the external teeth of the sun gear 8. The gear ring 7 is connected to the power system output shaft 15, and the power system output shaft 15 is connected to the rear axle 13. FIG. 1 shows, the planetary gear set having three power input ends, i.e., a power input end of the gear ring, a power input end of the sun gear and a power input end of the planet carrier. The planetary gear set further includes a power output end connected to the power system output shaft 15.

The hybrid power system further includes the engine 1, the ISG motor 4, and the main drive motor 10. FIG. 1 shows, the output shaft of the engine 1, the output shaft of the ISG motor 4, and the output shaft of the main drive motor 10 are arranged side by side. Compared with a coaxial arrangement of the three, the length in the left-right direction shown in FIG. 1 of the hybrid power system is shortened, the restriction of the size of the hybrid power system is eliminated, and the application range of the hybrid power system is expanded. In addition, both the ISG motor and the main drive motor can adopt the solid shaft motor due to the employed side-by-side arrangement mode. Compared with the coaxial arrangement mode existing in the prior art, the processing difficulty and the processing cost are reduced, and the risk that the lubricating oil of the planetary gear set infiltrates into the motor is reduced at the same time. FIG. 1 shows, the ISG motor 4 and the main drive motor 10 are respectively arranged on both sides of the output shaft of the engine 1, and the ISG motor 4, the engine 1 and the main drive motor 10 are all located on the same side of the planetary gear set, thereby further shortening the length in the left-right direction.

The output shaft of the engine 1 is connected to the planet carrier drive shaft 16. The planet carrier 6 is directly mounted on the planet carrier drive shaft 16. The output shaft of the engine 1 is provided with the torque damper 2. The planet carrier drive shaft 16 is provided with the first locking mechanism 3, which is capable of locking and unlocking the planet carrier drive shaft 16. When the planet carrier drive shaft 16 is locked, the planet carrier 6, the planet carrier drive shaft 16, and the engine 1 cannot rotate. When the planet carrier drive shaft 16 is unlocked, the three can rotate simultaneously to drive the planetary gear 14 to revolve.

In this embodiment, the ISG motor 4 can regulate the rotational speed of the output shaft of the engine, and also can be used as a separate drive motor. The output shaft of the ISG motor 4 is connected to the ISG motor drive gear 17, and the ISG motor drive gear 17 is engaged with the external teeth of the sun gear 8. The power system further includes the second locking mechanism 5 configured to lock and unlock the ISG motor drive gear 17. When the second locking mechanism 5 is unlocked, the ISG motor 4 can drive the sun gear 8 to rotate, and the sun gear 8 can also reversely drive the ISG motor 4 to rotate to generate power. When the second locking mechanism 5 is locked, the ISG motor 4, the ISG motor drive gear 17, and the sun gear 8 are all in a locked state and cannot rotate. In this embodiment, the second locking mechanism 5 realizes the control to the ISG motor 4, the ISG motor drive gear 17, and the sun gear 8 by locking or unlocking the ISG motor drive gear 17. In other embodiments, the second locking mechanism 5 can be arranged on the output shaft of the ISG motor or outside the sun gear, so as to lock and unlock the ISG motor or the sun gear. The ISG motor 4 is locked by the second locking mechanism 5, so that when the engine 1 directly drives the vehicle to run, the planetary gear set is prevented from being driven by the engine 1 and rotating, the ISG motor 4 is prevented from being reversely driven by the planetary gear set and rotating, and the electromechanical conversion and energy loss existing in the system are prevented. Otherwise, the output power of the engine needs to be enhanced in order to normally drive the vehicle to run, which lowers the working efficiency of the overall system.

The output shaft of the main drive motor 10 is connected to the gearbox 9. In this embodiment, the gearbox 9 is a two-gear gearbox including a first gear, a second gear and a neutral position. The output shaft of the gearbox 9 is provided with the gearbox gear 18, and the gearbox gear 18 is engaged with the external teeth of the gear ring 7 for transmission. The speed input from the main drive motor 10 to the planetary gear set can be reduced by the gearbox 9 arranged at the rear part of the main drive motor 10, and the torque is increased, so as to achieve the deceleration and torque increase function. The main drive motor 10 with a small output torque can be selected by setting the gearbox 9, thereby reducing the cost of the motor. The gearbox 9 is in different gear positions, so that the main drive motor 10 can adapt to the driving speed and driving conditions of the vehicle, and the main drive motor 10 can operate in a high efficiency region.

When in operation, the engine 1 drives the planet carrier 6 to rotate, and drives the planetary gear to revolve. The ISG motor is engaged with the sun gear 8 by the ISG motor drive gear 17 for transmission. The sun gear 8 rotates on its axis. Since the gearbox 9 has a neutral position, when the gearbox 9 is operating, and when the main drive motor 10 is in a non-operating state, the gearbox 9 is placed in the neutral position, and the planetary gear set does not reversely drive the main drive motor 10 to rotate, thereby preventing the main drive motor 10 from rotating under a zero torque, reducing the output load of the power system, and improving the working efficiency of the overall power system.

According to the present disclosure, the hybrid power system can realize the operating modes including the pure electric drive mode, the hybrid drive mode, the engine direct drive mode, the braking energy recovery mode and other operating modes, specifically as follows.

### I, Pure electric drive mode 1:

In this mode, the engine 1 does not start, and the ISG motor 4 does not operate. The first locking mechanism 3 is locked, and the second locking mechanism 5 is unlocked. The main driving motor 10 is operating. The power is transferred to the gear ring 7 of the planetary gear set by the deceleration and torque increase of the gearbox 9.

Since the first locking mechanism 3 is locked, the planetary gear 14 can not revolve, and the gear ring 7 drives the planetary gear 14 to rotate on its axis and thus drives the sun gear 8 to rotate. The second locking mechanism 5 is unlocked, and the sun gear 8 reversely drives the ISG motor 4 to generate power. The power of the power system is transmitted to the power system output shaft 15 through the gear ring 7, so as to transfer the power. The gearbox selects different working gears according to the requirements of different speeds and different working conditions of the vehicle, so that the main drive motor is always in the high efficiency region on the premise of satisfying the requirements of the driving condition of the vehicle, thereby improving the system efficiency. In this mode, the ISG motor 4 performs the follow-up power generation, and the mechanical energy is converted to electrical energy, which has a partial energy loss.

### II, Pure electric drive mode 2:

In this mode, the engine 1 does not start, the gearbox 9 is in a neutral position, and the main drive motor 10 does not operate. The first locking mechanism 3 is locked, and the second locking mechanism 5 is unlocked. The ISG motor 4 is operating. The power is transmitted to the sun gear 8 through the output shaft of the ISG motor and the gear, so as to drive the gear ring 7 to rotate and drive the whole vehicle to run.

In this mode, since the gearbox 9 is in a neutral position, the rotation of the gear ring 7 does not drive the main drive motor to rotate. Compared with the pure electric drive mode 1, this mode has no energy conversion and the energy loss is less.

### III, Hybrid drive mode:

In this mode, the first locking mechanism 3 and the second locking mechanism 5 are both unlocked, and the engine 1 operates. The ISG motor 4 is used as the regulating motor. The rotational speed and the torque of the engine are regulated according to the requirements of the whole vehicle, so that the engine is always operating in the high efficiency region, thereby improving the fuel economy. Meanwhile, the integrated controller 11 determines whether to turn on the main drive motor 10 to assist according to the torque required by the whole vehicle.

When the torque required by the whole vehicle is larger than the torque provided by the engine, the main drive motor 10 activates the output torque to drive the vehicle. When the torque provided by the engine matches the torque required by the whole vehicle, the main driving motor 10 does not operate, and the gearbox 9 is positioned at the neutral position. When the torque provided by the engine is greater than the torque required by the whole vehicle, the main drive motor 10 is in a power generation mode, which converts the excessive mechanical energy into electrical energy which then is stored in the power source 12.

### IV, Engine direct drive mode:

In this mode, the vehicle speed is higher, the engine 1 is operating in the high efficiency region. The first locking mechanism 3 is unlocked, and the ISG motor is locked by the second locking mechanism 5, so that the engine is in the direct drive mode. In this mode, the engine directly drives the vehicle to run, and the main drive motor determines whether to assist according to the requirements of the torque of the whole vehicle. Compared with the hybrid drive mode, this mode cancels the power generation provided by the ISG motor, and cancels the energy conversion, thereby improving the energy utilization.

### V, Braking energy recovery mode:

The power system output shaft 15 is connected to the gear ring, and the gear ring is connected to the main drive motor. In this mode, the engine does not operate, and the ISG motor does not operate. The main drive motor provides a braking force. The gearbox is in different gear positions according to the requirements of different braking forces, thereby ensuring a sufficient braking torque and recovering energy when the vehicle brakes. In this time, the main drive motor is switched into a power generation state and stores the electric energy in the power source 12.

In the present disclosure, the gearbox and the drive gear are respectively used for decelerating and increasing the torque of the main drive motor, thereby greatly improving the climbing performance of the power system driven by the main drive motor in the electric drive mode and the hybrid drive mode, and the system has better dynamic performance.

The output shaft of the engine, the output shaft of the ISG motor, and the output shaft of the main drive motor are arranged side by side, thereby shortening the axial dimension of the power system, eliminating the restriction of the size of the rear power system arranged longitudinally and expanding the application range of the system. In this embodiment, the three output shafts are axially parallel to one another. In other embodiments, the three output shafts can be distributed at a certain angle.

According to the present disclosure, the hybrid power system includes a mounting base. The engine, the ISG motor, and the main drive motor are integrally mounted on the mounting base. The integrated-type mounting method facilitates a combined installation with the rear axle.

In this embodiment, the first motor is the ISG motor, and the second motor is the main drive motor. In this embodiment, the gearbox is only arranged between the main drive motor and the planetary gear set. In other embodiments, the gearbox can also be arranged between the ISG motor and the planetary gear set. In this embodiment, the first locking mechanism is the engine locking mechanism, and the second locking mechanism is the ISG motor locking mechanism.

The specific embodiments of the series-parallel hybrid system of the present disclosure, and the structure of the series-parallel hybrid system are consistent with the structure of the above-mentioned embodiments, and the contents thereof are not described repeatedly herein.

## Claims

1. A series-parallel hybrid power system, comprising a planetary gear set; wherein the planetary gear set comprises three power input ends and a power output end; the series-parallel hybrid power system further comprises an engine, a first motor, and a second motor; the engine, the first motor and the second motor are correspondingly connected to the three power input ends, respectively; an output shaft of the engine, an output shaft of the first motor, and an output shaft of the second motor are non-coaxially arranged; the series-parallel hybrid power system comprises an engine locking mechanism configured to lock a power input end corresponding to the engine; a gearbox is arranged between at least one of the first motor and the second motor and a power input end corresponding to the planetary gear set.

2. The series-parallel hybrid power system according to claim 1, wherein, the first motor is an ISG motor, and the second motor is a main drive motor; the gearbox is arranged between the main drive motor and a power input end corresponding to the main drive motor.

3. The series-parallel hybrid power system according to claim 2, wherein, an output shaft of the ISG motor is engaged with a power input end corresponding to the ISG motor by a gear of the ISG motor for transmission; the hybrid power system further comprises an ISG motor locking mechanism configured to lock the output shaft of the ISG motor, or the gear of the ISG motor, or the power input end corresponding to the ISG motor.

4. The series-parallel hybrid power system according to claim 1, wherein, the output shaft of the engine, the output shaft of the first motor, and the output shaft of the second motor are arranged side by side; the first motor and the second motor are respectively arranged on both sides of the output shaft of the engine; and the engine, the first motor, and the second motor are located on a same side of the planetary gear set.

5. The series-parallel hybrid power system according to any one of claims 1-4, wherein, the hybrid power system comprises a mounting base; the engine, the first motor, the second motor, the planetary gear set, and the gearbox are integrally mounted on the mounting base.

6. The series-parallel hybrid power system according to claim 3, wherein, the hybrid power system has the following operating modes: I, pure electric drive mode 1: the engine does not start, the ISG motor does not operate, the engine locking mechanism is locked, the ISG motor locking mechanism is unlocked, the main drive motor operates, and power is transferred to the gearbox through the output shaft of the main drive motor to decelerate and increase a torque to drive a vehicle; II, pure electric drive mode 2: the engine does not start, the gearbox is in a neutral position, the main drive motor does not operate, the engine locking mechanism is locked, the ISG motor locking mechanism is unlocked, the ISG motor operates, and the ISG motor drives the vehicle to run; III, hybrid drive mode: the engine locking mechanism and the ISG motor locking mechanism are both unlocked, the engine operates, the ISG motor regulates a rotational speed and a torque of the engine, and the drive motor determines whether to operate and assist according to requirements of a whole vehicle; IV, engine direct drive mode: the engine locking mechanism is unlocked, the ISG motor locking mechanism is locked, the engine operates, the ISG motor does not operate, and the main drive motor determines whether to operate and assist according to the requirements of the whole vehicle; V, braking energy recovery mode: the engine does not operate, the ISG motor does not operate, the main drive motor provides a braking force, the gearbox is in different gear positions according to requirements of different braking forces; and when the vehicle brakes, the main drive motor is driven to generate power.

7. A vehicle, comprising a series-parallel hybrid power system; wherein the hybrid power system comprises a planetary gear set; the planetary gear set comprises three power input ends and a power output end; the hybrid power system further comprises an engine, a first motor, and a second motor; the engine, the first motor and the second motor are correspondingly connected to the three power input ends, respectively; an output shaft of the engine, an output shaft of the first motor and an output shaft of the second motor are non-coaxially arranged; the hybrid power system comprises an engine locking mechanism configured to lock a power input end corresponding to the engine; a gearbox is arranged between at least one of the first motor and the second motor and a power input end corresponding to the planetary gear set.

8. The vehicle according to claim 7, wherein, the first motor is an ISG motor, and the second motor is a main drive motor; the gearbox is arranged between the main drive motor and a power input end corresponding to the main drive motor.

9. The vehicle according to claim 8, wherein, an output shaft of the ISG motor is engaged with a power input end corresponding to the ISG motor by a gear of the ISG motor for transmission; the hybrid power system further comprises an ISG motor locking mechanism configured to lock the output shaft of the ISG motor, or the gear of the ISG motor, or the power input end corresponding to the ISG motor.

10. The vehicle according to claim 7, wherein, the output shaft of the engine, the output shaft of the first motor, and the output shaft of the second motor are arranged side by side; the first motor and the second motor are respectively arranged on both sides of the output shaft of the engine; and the engine, the first motor, and the second motor are located on a same side of the planetary gear set.

11. The vehicle according to any one of claims 7-10, wherein, the hybrid power system comprises a mounting base; the engine, the first motor, the second motor, the planetary gear set, and the gearbox are integrally mounted on the mounting base.

12. The vehicle according to claim 9, wherein, the hybrid power system has the following operating modes: I, pure electric drive mode 1: the engine does not start, the ISG motor does not operate, the engine locking mechanism is locked, the ISG motor locking mechanism is unlocked, the main drive motor operates, and the power is transferred to the gearbox through the output shaft of the main drive motor to decelerate and increase torque to drive a vehicle to run; II, pure electric drive mode 2: the engine does not start, the gearbox is in a neutral position, the main drive motor does not operate, the engine locking mechanism is locked, the ISG motor locking mechanism is unlocked, the ISG motor operates, and the ISG motor drives the vehicle to run; III, hybrid drive mode: the engine locking mechanism and the ISG motor locking mechanism are both unlocked, the engine operates, the ISG motor regulates a rotational speed and a torque of the engine, and the drive motor determines whether to operate and assist according to requirements of a whole vehicle; IV, engine direct drive mode: the engine locking mechanism is unlocked, the ISG motor locking mechanism is locked, the engine operates, the ISG motor does not operate, and the main drive motor determines whether to operate and assist according to the requirements of the whole vehicle; V, braking energy recovery mode: the engine does not operate, the ISG motor does not operate, the main drive motor provides a braking force, the gearbox is in different gear positions according to requirements of different braking forces; and when the vehicle brakes, the main drive motor is driven to generate power.
